# EUROPÄISCHE PATENTSCHRIFT

(11) **EP 4 162 165 B1**
(45) Veröffentlichungstag und Bekanntmachung des Hinweises auf die Patenterteilung: **19.06.2024**
(21) Anmeldenummer: 21722812.1
(22) Anmeldetag: 28.04.2021
(51) Int. Cl.: F16B 12/20

(54) **BESCHLAG FÜR MÖBELTEILE**
FITTING FOR FURNITURE PARTS
FERRURE POUR PIÈCES DE MEUBLE

(30) Priorität: 08.06.2020 DE 202020103273 U
(43) Veröffentlichungstag der Anmeldung: 12.04.2023
(73) Patentinhaber: Häfele Berlin GmbH & Co KG, 12307 Berlin (DE)
(72) Erfinder: ARNOLD, Lorenz, 6314 Unterägeri (CH); MERZ, Ulrich, 93059 Regensburg (DE)
(74) Vertreter: Kohler Schmid Möbus Patentanwälte
(86) Internationale Anmeldenummer: PCT/EP2021/061072
(87) Internationale Veröffentlichungsnummer: WO 2021/249691

(56) Entgegenhaltungen:
- EP-A1- 0 142 710
- DD-A3- 28 761
- DE-A1- 2 623 814
- DE-C- 231 111
- FR-A1- 2 152 941

## Beschreibung

Die Erfindung betrifft einen Beschlag zur Verbindung zweier Teile.

Möbelverbinder sind hinlänglich bekannt und dienen dazu, zwei winkelig, vorzugweise rechtwinklig, aufeinanderstoßende Möbelteile miteinander zu befestigten. Bekannte Möbelverbinder weisen ein drehbar gelagertes Anzugselement mit einem Schlitz für einen Schraubendreher auf, um nach dem Einsetzten des Möbelverbinders in eine Flächenbohrung eines Möbelteils das Anzugselement zu verdrehen und so einen am anderen Möbelteil befestigten Bolzen zu hintergreifen und heranzuziehen. Solche Beschläge sind bspw. aus der EP 0 142 710 A1 bekannt.

Demgegenüber ist es die Aufgabe der Erfindung, einen werkzeuglos betätigbaren Möbelverbinder anzugeben.

Diese Aufgabe wird erfindungsgemäß gelöst durch einen Beschlag zur Verbindung zweier Teile, aufweisend ein topfförmiges Gehäuse zum Einsetzen in eine randoffene Bohrung des einen Teils, zwei um eine im Gehäuse parallel zur Topfachse verlaufende Achse gelenkig verbundene, doppelarmige Hebel, die jeweils einen im Gehäuse angeordneten, inneren Hebelarm und einen über den Umfang des Gehäuses nach außen vorstehenden, äußeren Hebelarm zum Eingreifen in eine Flächenbohrung des anderen Teils aufweisen, und eine von einer Ausgangsin eine Endstellung bewegbare Handhabe mit einem Betätigungselement zum Verdrehen der inneren Hebelarme derart gegeneinander, dass die beiden äußeren Hebelarme in der Endstellung der Handhabe weiter aufspreizt sind als in der Ausgangsstellung.

Erfindungsgemäß sind die beiden doppelarmigen Hebel miteinander entweder scherenförmig, also kreuzend, verbunden, wobei das Betätigungselement mit den einander zugewandten Innenseiten der inneren Hebelarme zusammenwirkt, um die beiden inneren Hebelarme in der Endstellung der Handhabe weiter aufzuspreizen als in der Ausgangsstellung, oder die beiden doppelarmigen Hebel sind miteinander spreizzangenförmig, also nicht-kreuzend, verbunden, wobei das Betätigungselement mit den einander abgewandten Außenseiten der inneren Hebelarme zusammenwirkt, um die beiden inneren Hebelarme in der Endstellung der Handhabe weiter zusammenzudrücken als in der Ausgangsstellung.

Vorzugsweise weist das Betätigungselement eine Spreizkontur zum Aufspreizen der beiden inneren Hebelarme oder eine Drückkontur zum Zusammendrücken der beiden inneren Hebelarme auf.

Besonders bevorzugt weisen die äußeren Hebelarme an ihren aus dem Gehäuse vorstehenden freien Enden außenseitig jeweils mindestens eine nach außen abgewinkelte Keilnase und die inneren Hebelarme an ihren freien Enden außenseitig jeweils mindestens einen Zahn auf, der in der Endstellung aus dem Gehäuse nach außen vorsteht. In der Endstellung können sich die Keilnasen und die Zähne, wenn der Beschlag in entsprechende Bohrungen eingesetzt ist, in die Bohrungswände eindrücken und den Beschlag darin verankern.

Vorzugsweise weist das Gehäuse mindestens eine Umfangslasche, insbesondere zwei einander in Gehäuseumfangsrichtung zugewandte Umfangslaschen, auf, die beim Bewegen der Handhabe von der Ausgangs- in die Endstellung von den inneren Hebelarmen nach außen elastisch ausgelenkt oder elastisch verformt werden. Die Handhabe wird beim Bewegen von der Ausgangs- in die Endstellung gegen die elastische Rückstellkraft der Umfangslasche(n) in die Endstellung bewegt und ist somit in die Ausgangsstellung vorgespannt.

Um die Handhabe in der Endstellung zu halten, weisen die inneren Hebelarme vorzugsweise innenseitig jeweils eine Rastmulde oder einen Rastvorsprung auf, um das Betätigungselement in der Endstellung zu verrasten.

Erfindungsgemäß ist die Handhabe als ein am Gehäuse von der Ausgangs- in die Endstellung drehbar gelagerter Schwenkhebel ausgebildet. Weiterhin erfingungsgemäß ist der Schwenkhebel doppelarmig ausgebildet und am Gehäuse um eine zur Drehachse der beiden Hebel parallele Achse drehbar gelagert. Beim Verdrehen des Schwenkhebels in die Endstellung werden die beiden inneren Hebelarme betätigt und dadurch die äußeren Hebelarme aufgespreizt. Für eine leichte Greifbarkeit kann der Schwenkhebel in der Ausgangsstellung um einen Winkel gegenüber der Gehäusestirnseite hochgestellt sein. In einer anderen Weiterbildung ist der Schwenkhebel einarmig ausgebildet und am Gehäuse um eine zur Drehachse der beiden Hebel rechtwinklige Achse drehbar gelagert. In diesem Fall ist das Betätigungselement an der Unterseite des Schwenkhebels angeordnet und wirkt beim Herunterschwenken des Schwenkhebels mit den inneren Hebelarmen zusammen.

In einer anderen Ausführungsform der Erfindung ist die Handhabe als ein axial in das Gehäuse bis in die Endstellung einsteckbares Steckteil, wie z.B. ein Griffknopf, ausgebildet, das beim Einstecken mit den beiden inneren Hebelarmen zusammenwirkt.

Das Gehäuse kann vorteilhaft aus zwei Gehäusehälften zusammengesetzt sein, die entweder zwei separate Einzelteile sind oder mittels eines Filmscharniers einstückig miteinander verbunden sind.

Die Erfindung betrifft in einem weiteren Aspekt auch eine Möbelanordnung mit zwei winkelig, vorzugweise rechtwinklig, aufeinanderstoßenden Möbelteilen, die mittels des oben beschriebenen Beschlags miteinander befestigt sind, wobei das eine, erste Möbelteil eine randseitig offene Bohrung und das andere, zweite Möbelteil eine Flächenbohrung aufweisen und wobei das Gehäuse des Beschlags in die Bohrung des ersten Möbelteils eingesetzt ist und die äußeren Hebelarme des Beschlags in der Flächenbohrung des zweiten Möbelteils aufgespreizt sind.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: einen erfindungsgemäßen Beschlag in einer Explosionsdarstellung;
- Fign. 2a, 2b: den erfindungsgemäßen Beschlag in einer Ausgangsstellung (Fig. 2a) und in einer Endstellung (Fig. 2b);
- Fign. 3a, 3b: einen Querschnitt des erfindungsgemäßen Beschlags in der Ausgangsstellung (Fig. 3a) und in der Endstellung (Fig. 3b);
- Fig. 4: eine Möbelanordnung mit dem erfindungsgemäßen Beschlag; und
- Fign. 5, 6: zwei weitere Ausführungsformen des erfindungsgemäßen Beschlags, jeweils in der Ausgangsstellung.

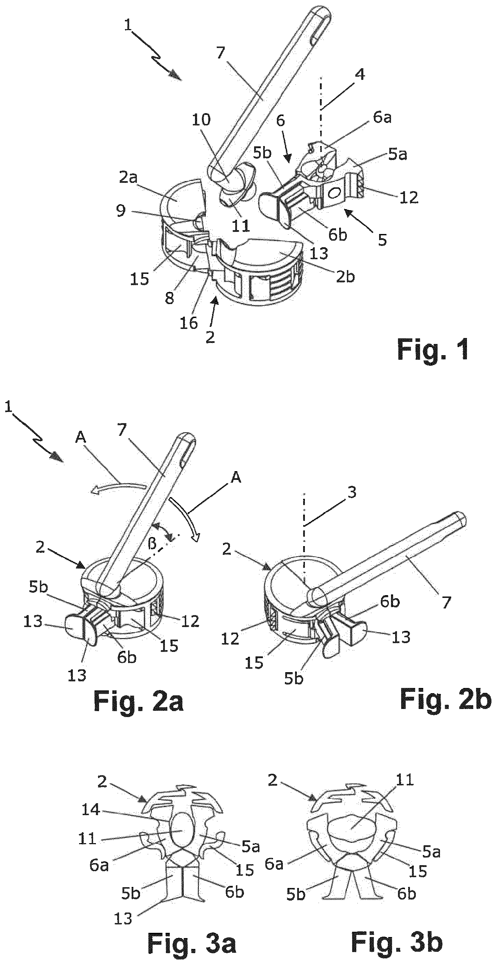

Der in **Fig. 1, 2a, 2b** gezeigte Beschlag **1** dient zur Befestigung zur Verbindung zweier Teile und umfasst ein topfförmiges Gehäuse **2,** zwei um eine im Gehäuse 2 parallel zur Topfachse **3** verlaufende Achse **4** gelenkig verbundene, doppelarmige Hebel **5, 6,** sowie eine von einer Ausgangsstellung (Fig. 2a) in eine Endstellung (Fig. 2b) bewegbare Handhabe in Form eines doppelarmigen Schwenkhebels **7.**

Die beiden Hebel 5, 6 sind miteinander scherenförmig verbunden und weisen jeweils einen im Gehäuse 2 angeordneten, inneren Hebelarm **5a, 6a** und einen äu-ßeren Hebelarm **5b, 6b** auf, der durch eine umfangsseitige Gehäuseöffnung **8** hindurch aus dem Gehäuse 2 nach außen vorsteht. Das Gehäuse 2 hat in seiner in den Figuren oberen Gehäusestirnseite eine runde Lageröffnung **9,** in der ein Schaft **10** des Schwenkhebels 7 drehbar gelagert ist, um so den Schwenkhebel 7 aus der in Fig. 2a gezeigten Ausgangsstellung um ca. ±90° um eine zu den Achsen 3, 4 parallele Achse in die in Fig. 2b gezeigte Endstellung zu drehen (Pfeilrichtung **A**). Wie in Fig. 2a gezeigt, kann der gegenüber der Schaftachse abgeknickte Schwenkhebel 7 in seiner Ausgangstellung zusätzlich um einen Winkel **ß** (z.B. 45°) gegenüber der oberen Gehäusestirnseite hochgeschwenkt sein.

An einem bis ins Gehäuseinnere hineinreichenden Hebelende des Schenkhebels 7 befindet sich ein Betätigungselement in Form eines Spreizelements **11** mit einer bezüglich der Schaftachse nicht kreisrunden, hier elliptischen Außen- bzw. Spreizkontur, welche in der Drehrichtung A radial nach außen ansteigt. Das Spreizelement 11 ist im Gehäuse 2 zwischen den einander zugewandten Innenseiten der inneren Hebelarme 5a, 6a angeordnet, um durch Drehen des Schwenkhebels 7 von der Ausgangs- in die Endstellung die beiden inneren Hebelarme 5a, 6a und damit auch die beiden äußeren Hebelarme 5b, 6b immer weiter aufzuspreizen. In der Endstellung des Schwenkhebels 7 sind die beiden äußeren Hebelarme 5b, 6b also weiter aufgespreizt als in der Ausgangsstellung, in der die beiden äußeren Hebelarme 5b, 6b Rücken an Rücken aneinander anliegen, also geschlossen sind. Die inneren Hebelarme 5a, 6a weisen an ihren freien Enden außenseitig Zähne **12** auf, die in der Endstellung aus dem Gehäuse 2 nach außen vorstehen. Die äußeren Hebelarme 5b, 6b weisen an ihren aus dem Gehäuse 2 vorstehenden freien Enden jeweils eine nach außen abgewinkelte Keilnase **13** auf.

Um das Spreizelement 11 und damit den Schwenkhebel 7 in der Endstellung zu halten, können optional die inneren Hebelarme 5a, 6a, wie in **Fign. 3a, 3b** gezeigt, innenseitig jeweils eine Mulde **14** aufweisen, in der das Spreizelement 11 in der Endstellung einrastet. Das Gehäuse 2 kann optional noch zwei Rückstellfedern in Form zweier einander in Gehäuseumfangsrichtung zugewandter Umfangslaschen **15** aufweisen, die beim Drehen des Schwenkhebels 7 von der Ausgangs- in die Endstellung von den inneren Hebelarmen 5a, 6a nach außen elastisch ausgelenkt bzw. in eine runde Außenkontur elastisch verformt werden. Der Schwenkhebel 7 wird beim Drehen von der Ausgangs- in die Endstellung gegen die elastische Rückstellkraft der Umfangslaschen 15 in die Endstellung gedreht und ist somit in die Ausgangsstellung vorgespannt.

Das Gehäuse 2 kann beispielsweise aus zwei Gehäusehälften **2a, 2b** zusammengesetzt sein, die entweder zwei separate Einzelteile sind oder, wie in Fig. 1 gezeigt, mittels eines Filmscharniers **16** einstückig miteinander verbunden sind.

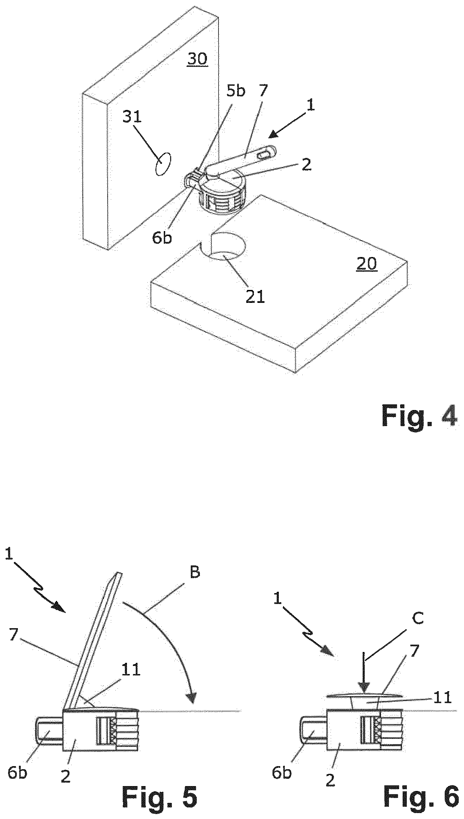

**Fig. 4** zeigt eine Möbelanordnung mit zwei rechtwinklig aufeinanderstoßenden Möbelteilen **20, 30,** die mittels des Beschlags 1 miteinander befestigt sind. Die hierzu erforderlichen Montageschritte sind wie folgt:
- Der Schwenkhebel 7 des Beschlag 1 befindet sich in seiner (mittleren) Ausgangsstellung und ist um den Winkel β nach oben hochgestellt.
- Das Gehäuse 2 des Beschlags 1 wird in eine Bohrung **21** des ersten Möbelteils 20 eingesetzt, die zur Möbelstirnseite hin randseitig offen ist. Die beiden äußeren Hebelarme 5b, 6b stehen aus der Möbelstirnseite vor und bilden, weil gegeneinander nicht aufgespreizt, gemeinsam einen Zapfen aus, der in eine Flächenbohrung **31** des zweiten Möbelteils 30 eingesetzt wird.
- Abschließend wird der Schwenkhebel 7 um ca. 90° in die eine oder in die andere Richtung bis in die Ausgangstellung gedreht und dabei gleichzeitig nach unten geschwenkt, bis er in der Endstellung parallel an der oberen Gehäusestirnseite anliegt. In der Endstellung ist das Spreizelement 11 in den Mulden 14 verrastet. Durch das Spreizelement 11 sind die inneren Hebelarme 5a, 6a und die äußeren Hebelarme 5b, 6b aufgespreizt, wodurch einerseits die Zähne 12 in die Bohrungswand der randoffenen Bohrung 21 und andererseits die Keilnasen 13 in die Bohrungswand der Flächenbohrung 31 eingedrückt werden. Durch die Keilnasen 13 werden die beiden Möbelplatte 20, 30 zusätzlich zueinander gezogen, bis sie spaltfrei aneinander anliegen.

Vom Beschlag der Fign. 1 und 2 unterscheidet sich der in **Fig. 5** gezeigte Beschlag 1 dadurch, dass hier der Schwenkhebel 7 einarmig und um eine parallel zur oberen Gehäusestirnseite verlaufende Achse schwenkbar gelagert ist, dass das Betätigungselement 11 an der Unterseite des Schwenkhebels 7 angeordnet ist und dass der Schwenkhebel 7 in der in Fig. 5 gezeigten Ausgangsstellung gegenüber der oberen Gehäusestirnseite um ca. 70° hochsteht. Beim Herunterschwenken des Schwenkhebels 7 in die Endstellung (Pfeilrichtung **B**), in der er parallel an der oberen Gehäusestirnseite anliegt, spreizt das Betätigungselement 11 die beiden inneren Hebelarme 5a, 6a und damit auch die beiden äußeren Hebelarme 5b, 6b auf. Hierfür können das Betätigungselement 11 und/oder die Außenseiten der inneren Hebelarme 5a, 6a entsprechende Schrägflächen aufweisen, welche die Absenkbewegung des Betätigungselements 11 in eine Spreizbewegung der inneren Hebelarme 5a, 6a umsetzen.

Vom Beschlag der Fign. 1 und 2 unterscheidet sich der in **Fig. 6** gezeigte Beschlag 1 dadurch, dass hier die Handhabe als ein Steckteil 7 ausgebildet ist, der aus der gezeigten Ausgangsstellung axial (Pfeilrichtung **C**) in das Gehäuse 2 bis in die Endstellung eingedrückt wird. Das Betätigungselement 11 befindet sich an der Unterseite des Steckteils 7 und ist beispielsweise als ein sich nach unten verjüngender Konus ausgebildet, der beim Eindrücken des Steckteils 7 die beiden inneren Hebelarme 5a, 6a und damit auch die beiden äußeren Hebelarme 5b, 6b aufspreizt.

Statt einander scherenförmig zu kreuzen, können bei anderen, hier nicht gezeigten Ausführungsformen die beiden Hebel miteinander spreizzangenförmig verbunden sein, sich also nicht kreuzen. In diesem Fall sind in der Ausgangsstellung die inneren Hebelarme geöffnet und die äußeren Hebelarme geschlossen. Das Betätigungselement der Handhabe hat eine Drückkontur, die mit den einander abgewandten Außenseiten der inneren Hebelarme zusammenwirkt, um beim Bewegen der Handhabe in die Endstellung die beiden inneren Hebelarme gegeneinander zusammenzudrücken und damit die beiden äußeren Hebelarme aufzuspreizen.

## Patentansprüche

1. Beschlag (1) zur Verbindung zweier Teile (20, 30), aufweisend
ein topfförmiges Gehäuse (2) zum Einsetzen in eine randoffene Bohrung (21) des einen Teils (20),
zwei um eine im Gehäuse (2) parallel zur Topfachse (3) verlaufende Achse (4) gelenkig verbundene, doppelarmige Hebel (5, 6), die jeweils einen im Gehäuse (2) angeordneten, inneren Hebelarm (5a, 6a) und einen über den Umfang des Gehäuses (2) nach außen vorstehenden, äußeren Hebelarm (5b, 6b) zum Eingreifen in eine Flächenbohrung (31) des anderen Teils (30) aufweisen, und
eine von einer Ausgangs- in eine Endstellung bewegbare Handhabe (7) mit einem Betätigungselement (11) zum Verdrehen der inneren Hebelarme (5a, 6a) derart gegeneinander, dass die beiden äußeren Hebelarme (5b, 6b) in der Endstellung der Handhabe (7) weiter aufgespreizt sind als in der Ausgangsstellung,
wobei die Handhabe als ein am Gehäuse (2) von der Ausgangs- in die Endstellung drehbar gelagerter Schwenkhebel (7) ausgebildet ist, der doppelarmig ausgebildet und am Gehäuse (2) um eine zur Drehachse (4) der beiden Hebel (5, 6) parallele Achse drehbar gelagert ist, und
**dadurch gekennzeichnet, dass**
die beiden doppelarmigen Hebel (5, 6) entweder miteinander scherenförmig verbunden sind und das Betätigungselement (11) mit den einander zugewandten Innenseiten der inneren Hebelarme (5a, 6a) zusammenwirkt, um die beiden inneren Hebelarme (5a, 6a) in der Endstellung der Handhabe (7) weiter aufzuspreizen als in der Ausgangsstellung, oder miteinander spreizzangenförmig verbunden sind und das Betätigungselement (11) mit den einander abgewandten Außenseiten der inneren Hebelarme (5a, 6a) zusammenwirkt, um die beiden inneren Hebelarme (5a, 6a) in der Endstellung der Handhabe (7) weiter zusammenzudrücken als in der Ausgangsstellung.

2. Beschlag nach Anspruch 1, **dadurch gekennzeichnet, dass** das Betätigungselement (11) eine Spreizkontur zum Aufspreizen der beiden inneren Hebelarme (5a, 6a) oder eine Drückkontur zum Zusammendrücken der beiden inneren Hebelarme (5a, 6a) aufweist.

3. Beschlag nach einem der vorhergehenden Ansprüche, **dadurch gekennzeichnet, dass** die äußeren Hebelarme (5b, 6b) an ihren aus dem Gehäuse (2) vorstehenden freien Enden außenseitig jeweils mindestens eine nach außen abgewinkelte Keilnase (13) aufweisen.

4. Beschlag nach einem der vorhergehenden Ansprüche, **dadurch gekennzeichnet, dass** die inneren Hebelarme (5a, 6a) an ihren freien Enden außenseitig jeweils mindestens einen Zahn (12) aufweisen, der in der Endstellung aus dem Gehäuse (2) nach außen vorsteht.

5. Beschlag nach einem der vorhergehenden Ansprüche, **dadurch gekennzeichnet, dass** das Gehäuse (2) mindestens eine Umfangslasche (15), insbesondere zwei einander in Gehäuseumfangsrichtung zugewandte Umfangslaschen (15), aufweist, die beim Bewegen der Handhabe (7) von der Ausgangs- in die Endstellung von den inneren Hebelarmen (5a, 6a) nach außen elastisch ausgelenkt oder elastisch verformt werden.

6. Beschlag nach einem der vorhergehenden Ansprüche, **dadurch gekennzeichnet, dass** die inneren Hebelarme (5a, 6a) innenseitig jeweils eine Rastmulde (14) oder einen Rastvorsprung aufweisen, um das Betätigungselement (11) in der Endstellung zu verrasten.

7. Beschlag nach Anspruch 6, **dadurch gekennzeichnet, dass** der Schwenkhebel (7) in der Ausgangsstellung der Handhabe (7) um einen Winkel (β) gegenüber der Gehäusestirnseite hochgestellt ist.

8. Beschlag nach einem der vorhergehenden Ansprüche, **dadurch gekennzeichnet, dass** das Gehäuse (2) aus zwei Gehäusehälften (2a, 2b) zusammengesetzt ist, die insbesondere mittels eines Filmscharniers (16) einstückig miteinander verbunden sind.

9. Möbelanordnung mit einem Beschlag (1) nach einem der vorhergehenden Ansprüche und zwei winkelig, vorzugweise rechtwinklig, aufeinanderstoßenden Möbelteilen (20, 30), die mittels des Beschlags (1) nach einem der vorhergehenden Ansprüche miteinander befestigt sind, wobei das eine, erste Möbelteil (20) eine randseitig offene Bohrung (21) und das andere, zweite Möbelteil (30) eine Flächenbohrung (31) aufweisen und wobei das Gehäuse (2) des Beschlags (1) in die Bohrung (21) des ersten Möbelteils (20) eingesetzt ist und die äußeren Hebelarme (5b, 6b) des Beschlags (1) in der Flächenbohrung (31) des zweiten Möbelteils (30) aufgespreizt sind.

## Claims

1. Fitting (1) for connecting two parts (20, 30), comprising
a cup-shaped housing (2) for insertion into an open-edge bore (21) in the one part (20),
two double-armed levers (5, 6) which are connected in an articulated manner about an axis (4) running, in the housing (2), parallel to the cup axis (3) and which each have an inner lever arm (5a, 6a) which is arranged in the housing (2) and an outer lever arm (5b, 6b) which projects outwards beyond the circumference of the housing (2) for engaging in a surface-area bore (31) in the other part (30), and
a handle (7) which can be moved from a starting position into an end position and has an actuating element (11) for rotating the inner lever arms (5a, 6a) in relation to one another such that the two outer lever arms (5b, 6b) are spread further apart in the end position of the handle (7) than in the starting position, wherein the handle is formed as a pivot lever (7) which is mounted on the housing (2) so as to be rotatable from the starting position into the end position and is formed to be double-armed and is mounted on the housing (2) so as to be rotatable about an axis parallel to the rotational axis (4) of the two levers (5, 6),
**characterized in that**
the two double-armed levers (5, 6) are either connected together in a scissors-like manner and the actuating element (11) cooperates with the inner faces of the inner lever arms (5a, 6a), which face one another, in order to spread the two inner lever arms (5a, 6a) further apart in the end position of the handle (7) than in the starting position, or are connected together in the manner of spreading tongs and the actuating element (11) cooperates with the outer faces of the inner lever arms (5a, 6a), which face away from one another, in order to press the two inner lever arms (5a, 6a) further together in the end position of the handle (7) than in the starting position.

2. The fitting as claimed in claim 1, **characterized in that** the actuating element (11) has a spreading contour for spreading apart the two inner lever arms (5a, 6a), or a pressing contour for pressing together the two inner lever arms (5a, 6a).

3. The fitting as claimed in one of the preceding claims, **characterized in that** the outer lever arms (5b, 6b) each have at their free ends protruding from the housing (2) on the outer face at least one outwardly angled wedge nose (13).

4. The fitting as claimed in one of the preceding claims, **characterized in that** the inner lever arms (5a, 6a) each have at their free ends on the outer face at least one tooth (12) which in the end position protrudes outwardly from the housing (2).

5. The fitting as claimed in one of the preceding claims, **characterized in that** the housing (2) has at least one circumferential tab (15), in particular two circumferential tabs (15) which face one another in the housing circumferential direction and which are elastically deflected or elastically deformed outwardly by the inner lever arms (5a, 6a) when the handle (7) is moved from the starting position into the end position.

6. The fitting as claimed in one of the preceding claims, **characterized in that** the inner lever arms (5a, 6a) each have on the inner face a latching recess (14) or a latching projection in order to latch the actuating element (11) in the end position.

7. The fitting as claimed in claim 6, **characterized in that** in the starting position of the handle (7) the pivot lever (7) is lifted up by an angle (β) relative to the housing front face.

8. The fitting as claimed in one of the preceding claims, **characterized in that** the housing (2) is composed of two housing halves (2a, 2b) which, in particular, are integrally connected together by means of a film hinge (16).

9. A furniture arrangement with a fitting (1) according to one of the preceding claims and two furniture parts (20, 30) which abut one another at an angle, preferably at right-angles, and which are fastened together by means of the fitting (1) as claimed in one of the preceding claims, wherein the one first furniture part (20) has an edge-side open bore (21) and the other second furniture part (30) has a surface-area bore (31), and wherein the housing (2) of the fitting (1) is inserted into the bore (21) of the first furniture part (20) and the outer lever arms (5b, 6b) of the fitting (1) are spread apart in the surface-area bore (31) of the second furniture part (30).

## Revendications

1. Ferrure (1) dévolue à la liaison de deux parties (20, 30), comprenant
un boîtier (2) en forme de pot, conçu pour être inséré dans un alésage (21) à bord ouvert de l'une (20) desdites parties,
deux leviers (5, 6) à deux bras, reliés de manière articulée autour d'un axe (4) s'étendant parallèlement à l'axe (3) du pot, dans le boîtier (2), et respectivement munis d'un bras intérieur (5a, 6a) qui est logé dans ledit boîtier (2), et d'un bras extérieur (5b, 6b) faisant saillie vers l'extérieur au-delà du pourtour dudit boîtier (2), en vue de la pénétration dans un alésage (31) pratiqué dans la surface de l'autre partie (30), et
une poignée (7) pouvant être mue d'une position initiale à une position finale, et dotée d'un élément d'actionnement (11) destiné à imprimer une rotation mutuelle aux bras intérieurs (5a, 6a) des leviers de façon telle que, dans la position finale de ladite poignée (7), les deux bras extérieurs (5b, 6b) desdits leviers soient déployés davantage que dans la position initiale,
sachant que la poignée est réalisée sous la forme d'un levier pivotant (7) qui est monté avec faculté de rotation de la position initiale à la position finale, sur le boîtier (2), est conçu à deux bras et est monté rotatif, sur ledit boîtier (2), autour d'un axe parallèle à l'axe de rotation (4) des deux leviers (5, 6),
**caractérisée par le fait que**
les deux leviers (5, 6) à deux bras sont reliés l'un à l'autre en forme de ciseaux, et l'élément d'actionnement (11) coopère avec les faces internes des bras intérieurs (5a, 6a) desdits leviers, tournées l'une vers l'autre, de manière à déployer les deux bras intérieurs (5a, 6a) desdits leviers, dans la position finale de la poignée (7), davantage que dans la position initiale ; ou bien sont reliés l'un à l'autre en forme de pince extensible, et ledit élément d'actionnement (11) coopère avec les faces externes desdits bras intérieurs (5a, 6a) des leviers, tournées à l'opposé l'une de l'autre, de manière à comprimer les deux bras intérieurs (5a, 6a) desdits leviers, dans ladite position finale de la poignée (7), davantage que dans ladite position initiale.

2. Ferrure selon la revendication 1, **caractérisée par le fait que** l'élément d'actionnement (11) est pourvu d'un profil de déploiement conçu pour déployer les deux bras intérieurs (5a, 6a) des leviers, ou d'un profil de compression conçu pour comprimer les deux bras intérieurs (5a, 6a) desdits leviers.

3. Ferrure selon l'une des revendications précédentes, **caractérisée par le fait que** les bras extérieurs (5b, 6b) des leviers sont extérieurement munis à chaque fois, au niveau de leurs extrémités libres dépassant au-delà du boîtier (2), d'au moins un bec de coincement (13) coudé vers l'extérieur.

4. Ferrure selon l'une des revendications précédentes, **caractérisée par le fait que** les bras intérieurs (5a, 6a) des leviers sont extérieurement dotés à chaque fois, au niveau de leurs extrémités libres, d'au moins une dent (12) qui dépasse vers l'extérieur au-delà du boîtier (2) dans la position finale.

5. Ferrure selon l'une des revendications précédentes, **caractérisée par le fait que** le boîtier (2) est pourvu d'au moins une patte périphérique (15), en particulier de deux pattes périphériques (15) qui sont tournées l'une vers l'autre dans la direction du pourtour dudit boîtier et qui, lors du mouvement de la poignée (7) de la position initiale à la position finale, sont déviées élastiquement vers l'extérieur ou déformées élastiquement par les bras intérieurs (5a, 6a) des leviers.

6. Ferrure selon l'une des revendications précédentes, **caractérisée par le fait que** les bras intérieurs (5a, 6a) des leviers sont intérieurement munis, à chaque fois, d'une creusure d'encliquetage (14) ou d'une protubérance d'encliquetage, en vue du crantage de l'élément d'actionnement (11) dans la position finale.

7. Ferrure selon la revendication 6, **caractérisée par le fait que** le levier pivotant (7) est relevé d'un angle (β) par rapport à la face extrême du boîtier dans la position initiale de la poignée (7).

8. Ferrure selon l'une des revendications précédentes, **caractérisée par le fait que** le boîtier (2) est composé de deux moitiés (2a, 2b) qui sont notamment reliées l'une à l'autre, d'un seul tenant, au moyen d'une charnière pelliculaire (16).

9. Agencement de meuble comprenant une ferrure (1) conforme à l'une des revendications précédentes, et deux parties de meuble (20, 30) qui se rencontrent en décrivant un angle, de préférence un angle droit, et sont reliées l'une à l'autre au moyen de ladite ferrure (1) conforme à l'une des revendications précédentes, sachant que l'une des parties, ou première partie (20) du meuble, et l'autre partie, ou seconde partie (30) dudit meuble, sont respectivement munies d'un alésage (21) à bord ouvert et d'un alésage (31) pratiqué dans la surface, et sachant que le boîtier (2) de ladite ferrure (1) est inséré dans ledit alésage (21) de la première partie (20) du meuble, et les bras extérieurs (5b, 6b) des leviers de ladite ferrure (1) sont déployés dans ledit alésage (31) pratiqué dans la surface de la seconde partie (30) dudit meuble.
